# EUROPÄISCHE PATENTSCHRIFT

(11) **EP 2 192 338 B1**
(45) Veröffentlichungstag und Bekanntmachung des Hinweises auf die Patenterteilung: **26.02.2014**
(21) Anmeldenummer: 10002674.9
(22) Anmeldetag: 13.12.2006
(51) Int. Cl.: F16L 37/092, F16L 19/02, F16L 19/12, F16L 33/22

(54) **Anschlussstück**
Connecting piece
Pièce de raccordement

(30) Priorität: 20.03.2006 EP 06405122
(43) Veröffentlichungstag der Anmeldung: 02.06.2010
(62) Teilanmeldung aus: 06405122.0
(73) Patentinhaber: R. Nussbaum AG, 4601 Olten (CH)
(72) Erfinder: Zeiter, Patrik, 4853 Riken (CH); Näf, Andreas, 5000 Aarau (CH); Bobst, Urs, 4703 Kestenholz (CH); Schindler, Peter, 9043 Trogen (CH); Krohn, Michael, 8049 Zürich (CH); Sutter, Michael, 8047 Zürich (CH)
(74) Vertreter: Rüfenacht, Philipp Michael

(56) Entgegenhaltungen:
- EP-A1- 0 565 820
- WO-A1-2006/019238
- DE-A1- 19 945 721
- DE-U1-202004 017 433
- US-A1- 2004 169 370
- US-B1- 6 325 389

## Beschreibung

### Technisches Gebiet

Die Erfindung betrifft ein Anschlussstück mit einem ersten rohrförmigen Teil, welches mit einem zweiten rohrförmigen Teil eines fluidführenden Leitungssystems fluiddicht verbindbar ist, wobei das Anschlussstück derart ausgebildet ist, dass eines der rohrförmigen Teile in verbundenem Zustand teilweise vom anderen rohrförmigen Teil umschlossen ist, wobei im ersten rohrförmigen Teil an einer in verbundenem Zustand das zweite rohrförmige Teil kontaktierenden Fläche eine Ringnut ausgespart ist, in welche eine Ringdichtung eingebracht ist, und wobei das Anschlussstück derart ausgebildet ist, dass das zweite rohrförmige Teil durch Aufschieben auf den ersten Teil bzw. durch Einschieben in den ersten Teil in einer Ein-/Aufschubrichtung im Sinn einer Steckverbindung mit dem ersten rohrförmigen Teil verbindbar ist. Die Erfindung betrifft weiter ein Verbindungsstück (Fitting) sowie eine Aramatur mit einem derartigen Anschlussstück.

### Stand der Technik

Fluidführende Leitungssysteme, insbesondere für Wasser oder wässrige Lösungen, sind zumeist aus mehreren Elementen (Rohre, Verbindungsstücke bzw. Fittings, Armaturen etc.) aufgebaut. Diese Elemente weisen üblicherweise Anschlussstücke mit rohrförmigen Teilen auf, wobei die rohrförmigen Teile mit entsprechenden rohrförmigen Teilen der Anschlussstücke benachbarter Elemente verbunden werden können. Damit die Verbindung dicht ist, d. h. damit ein Austreten der im Leitungssystem geführten Flüssigkeit bei den Verbindungsstellen verhindert wird, sind letztere mit Dichtungen versehen. Bei vielen Leitungssystemen, z. B. für die Wasserversorgung (inkl. Hausverteilung), ist eine lange Lebensdauer gefordert, d. h. die Verbindungen müssen über einen langen Zeitraum (z. B. 50 Jahre) dicht bleiben.

Zur mechanisch festen und fluiddichten Verbindung der rohrförmigen Teile sind verschiedene Verbindungstechniken bekannt. Bei einer Schraubverbindung sind die miteinander zusammenwirkenden Teile mit zueinander passenden Gewinden versehen, bei einer Pressverbindung erfolgt ein mechanisches Verpressen eines der Teile oder einer zusätzlichen Presshülse. Steckverbindungen ermöglichen ein einfaches Verbinden der rohrförmigen Teile, indem eines der Teile auf das andere auf- oder in dieses eingeschoben wird, wobei im Wesentlichen durch die Ein- bzw. Aufschiebebewegung die mechanisch feste und fluiddichte Verbindung hergestellt wird, ohne dass ein Verschrauben der beiden Teile aneinander oder eine mechanische Verpressung notwendig ist.

Steckverbinder bieten somit den Vorteil einer einfachen und schnellen Montage. Allerdings gilt die Steckverbindung punkto Dichtheit und mechanischer Stabilität nach wie vor als den Schraub- und Pressverbindungen unterlegen. In letzter Zeit sind Anstrengungen unternommen worden, um die Steckverbindung im Hinblick auf die genannten zwei Anforderungen zu verbessern.

Die EP 0 989 348 A1 (Comap) betrifft beispielsweise einen Steckverbinder mit einer Hülse zur Aufnahme einer Dichtung und eines Krallrings mit elastischen Zähnen, die bezüglich einer Querebene geneigt sind. Die im Wesentlichen kreiszylindrische Hülse ist lokal verformt, so dass eine ringförmige Aufnahme für die Dichtung und den Krallring gebildet wird. Die Dichtung ist in Einschubrichtung vor dem Befestigungsring angeordnet. Entsprechend wird im Dichtbereich das Rohr nicht durch den Krallring zerkratzt.

Dieser Steckverbinder ist sehr einfach aufgebaut, die Sicherheit der Abdichtung und der mechanischen Verbindung vermag hohen Ansprüchen aber nicht zu genügen. Es besteht zudem die Gefahr, dass am Ort des Kontakts zwischen Krallring und Rohr eine ringförmige Schwächungsstelle geschaffen wird, an welcher bei hoher Belastung das aufgenommene Rohr ausbrechen könnte.

Die DE 199 45 721 A1 (Friatec AG) zeigt eine Steckkupplung mit einem Grundkörper, einem Dichtring, einem Klemmring sowie einem mit dem Grundkörper verbindbaren Ringkörper. Das Ende eines mit der Steckkupplung zu verbindenden Rohres kann in einen axialen Ringspalt zwischen dem Grundkörper und dem Ringkörper eingeschoben werden. In diesem Ringspalt ist der Klemmring angeordnet, welcher an der Klemmfläche des Ringkörpers und an der Aussenfläche des eingeschobenen Rohrendes unter Vorspannung anliegt. Die Merkmale des Oberbegriffs des Anspruchs 1 sind aus dieser Schrift bekannt.

Der Klemmring ermöglicht eine verbesserte axiale Sicherung. Der Klemmring wirkt auf einer grösseren Fläche auf die Rohraussenwand, so dass im Vergleich zu einem Krallring eine Schwächung des Rohrs vermieden wird.

Die DE 102 12 735 A1 (Georg Fischer Haustechnik AG) betrifft eine Schnellkupplung für Rohrleitungen mit Fittings, welche einen Innenteil, eine Aussenhülse sowie eine Innenhülse mit einem Zahnring und einem Klemmring aufweist. Die Innenhülse ist aus mindestens zwei Teilen zusammengesetzt, damit der Innenteil in diesen eingesetzt werden kann.

Die Kombination aus Zahnring (Krallring) und Klemmring ermöglicht eine verbesserte mechanische Verbindung. Der Steckverbinder ist aber recht kompliziert aufgebaut, die Teilung der Innenhülse bringt zudem gewisse mechanische Schwachstellen mit sich.

Die WO 2006/019238 (K. Sukyoon) offenbart einen Steckverbinder für Rohre mit einer konischen Aufnahme, in welcher mehrere Klemmsegmente aufgenommen sind; diese sind gemeinsam an einem Federelement gehalten, welches sie in Richtung Einstecköffnung der Aufnahme drückt, wodurch sie aufgrund der konischen Form der Aufnahme eine Klemmkraft auf ein eingeschobenes Rohr ausüben. Zur Aufnahme der Klemmsegmente weist das Federelement mehrere Kopplungsöffnungen auf.

Als Dichtungen werden bei den genannten Steckverbindern elastische O-Ringe oder Ringdichtungen aus einem kautschukartigen Material (z. B. NBR, EPDM) eingesetzt, welche in Ringnuten an einem der rohrförmigen Teile aufgenommen sind. Die O-Ringe werden durch den Druck des im Leitungssystem geführten Mediums innerhalb der Nut derart bewegt und verformt, dass sie gegen das Gegenstück abdichten; ohne Mediendruck ist die Abdichtung nur teilweise vorhanden. Der Querschnitt der Dichtringe ist so gewählt, dass sie beim Einschieben des Rohrs leicht radial komprimiert werden; um das Einschieben des Rohrs nicht zu erschweren und eine Beschädigung der Ringdichtung beim Einschieben zu vermeiden, sind die erreichbare Kompression und somit die Sicherheit der Abdichtung aber eingeschränkt. Es werden zudem hohe Anforderungen an die Präzision der Rohrinnen- und/oder Aussendurchmesser gestellt. O-Ringe und Ringdichtungen verlieren zudem mit der Zeit ihre Elastizität, so dass die Dichtwirkung nachlässt.

Aufgabe der Erfindung ist es, ein dem eingangs genannten technischen Gebiet zugehörendes Ansehlussstück zu schaffen, welches einfach aufgebaut ist und eine stabile mechanische Verbindung sowie eine sichere Abdichtung gegen den Austritt des transportierten Fluids ermöglicht.

Die Lösung der Aufgabe ist durch die Merkmale des Anspruchs 1 definiert. Gemäss der Erfindung umfasst das Anschlusstück ein Kappenteil, welches das zweite rohrförmige Teil in verbundenem Zustand teilweise umschliesst. Das Anschlussstück umfasst weiter einen Klemm-/Krallring zum axialen Sichern des eingeschobenen zweiten rohrförmigen Teils. Der Klemm-/Krallring ist in einer sich in Ein-/Aufschubrichtung erweiternden Aufnahmenut im Kappenteil aufgenommen, und der Klemm-/Krallring ist in der Aufnahmenut verschiebbar und wird durch ein stirnseitig angeordnetes Federelement gegen die Ein-/ Aufschubrichtung gedrückt. Der Klemm-/Krallring umfasst mehrere Krallsegmente, wobei jedes Krallsegment mehrere in Umfangsrichtung voneinander beabstandete Krallen aufweist.

Das Kappenteil kann verschiedene Aufgaben übernehmen: So kann es die Verbindungsstelle von äusseren Einflüssen schützen, als Stütze bzw. Aufnahme für einen Klemm- und/oder Krallring dienen, eine Ringdichtung aufnehmen, eine Verdrehsicherung bilden usw.

Der Klemm-/Krallring gewährleistet einen guten mechanischen Halt, insbesondere eine zuverlässige axiale Sicherung, und eine sichere Abdichtung Der Klemm-/Krallring wirkt mit dem eingeschobenen zweiten rohrförmigen Teil zusammen und sichert dieses axial. Die Klemmfunktion ergibt sich durch eine verhältnismässig grossflächige radiale Presskraft auf das zweite rohrförmige Teil (also primär durch Kraftschluss), die Krallfunktion durch ein kleinräumiges Eindringen von Krallen des Klemm-/Krallrings in das zweite rohrförmige Teil (also primär durch Formschluss). Der Klemm-/Krallring ist so an einem weiteren Element des Anschlussstücks (z. B. einer Kappe) angeordnet, dass er axial nicht oder nur minim verschiebbar ist.

Die Form des Klemm-/Krallrings ist dem Querschnitt der Aufnahmenut angepasst, so dass er grossflächig am Grund der Nut und bei eingeschobenem zweiten rohrförmigen Teil auch auf dem Aussenmantel des rohrförmigen Teils aufliegt. Die genannte Form der Aufnahmenut hat zur Folge, dass die Anpresskraft des Klemm-/Krallrings und damit der Kraftschluss zwischen Klemm-/Krallring und zweitem rohrförmigen Teil beim Zurückziehen des eingeschobenen zweiten rohrförmigen Teils vergrössert wird, was ein weiteres Zurückziehen verunmöglicht.

Indem der Klemm-/Krallring in der Nut verschiebbar ist und durch ein stirnseitig angeordnetes Federelement gegen die Ein-/Aufschubrichtung gedrückt wird, wird gewährleistet, dass der Klemm-/Krallring unabhängig von Toleranzen des Rohrdurchmessers beim Einschieben des zweiten rohrförmigen Teils bereits von Beginn an in Kontakt sowohl mit der Rohrfläche als auch mit der Nut ist. Der Klemm-/Krallring hat keine Bewegungsfreiheit. Das Federelement wird beim Ein-/Aufschieben des zweiten rohrförmigen Teils elastisch komprimiert, wodurch eine Vorspannung aufgebaut wird, welche die initiale Klemmwirkung zwischen Klemm-/Krallring und zweitem rohrförmigen Teil begünstigt.

Mit Vorteil ist die Ringdichtung derart ausgebildet und am ersten rohrförmigen Teil angebracht, dass beim Aufschieben bzw. Einschieben des zweiten rohrförmigen Teils die Dichtung bezüglich des ersten rohrförmigen Teils aus einer ersten Position in eine zweite Position verschoben wird, wobei die Verschiebung eine Kompression der Ringdichtung zwischen dem ersten rohrförmigen Teil und dem zweiten rohrförmigen Teil zur Folge hat.

Nach erfolgter Ein- bzw. Aufschubbewegung verbleibt die Ringdichtung in der zweiten Position und wird somit dauerhaft komprimiert. Die durch das Ein- bzw. Aufschieben bewirkte Verschiebung der Ringdichtung geht über die Kompression hinaus, die die Ringdichtung allenfalls aufgrund der Anwesenheit des ein- bzw. aufgeschobenen rohrförmigen Teils erfährt. Die Dichtung wird also beispielsweise aus einer ersten Position, in welcher ihr ein grösserer Raum zur Verfügung steht, in eine zweite Position verschoben, in welcher der freie Raum kleiner ist. Somit kann die Ringdichtung stärker komprimiert werden, als wenn die Dichtung lediglich durch das ein- bzw. aufgeschobene Rohr radial komprimiert wird. Trotzdem wird die Ein- bzw. Aufschubbewegung des Rohrs nicht behindert, und Beschädigungen der Ringdichtung durch das Ein- bzw. Aufschieben können bei einer entsprechenden Anordnung und Ausbildung der Ringdichtung und deren erster und zweiter Position vermieden werden.

Das rohrförmige Teil des erfindungsgemässen Anschlussstücks kann mit einem rohrförmigen Teil einer Armatur, eines Fittings bzw. mit einem Rohr verbunden werden. Das genannte Anschlussstück ist grundsätzlich sowohl für Kunststoffrohre, z. B. aus Polyethylen (PE, PEX, PE-RT), Polypropylen (PP) oder Polybutylen (PB), für Verbundrohre als auch für Metallrohre, z. B. aus Edelstahl, Kupfer oder verzinktem Stahl, geeignet. Im Anschlussstück können mehrere axial beabstandete Ringdichtungen vorgesehen sein, wobei alle oder nur einige derselben im Rahmen der Ein- bzw. Aufschubbewegung verschoben und dadurch zusätzlich komprimiert werden.

Das Anschlussstück kann insbesondere Teil eines Verbindungsstücks (Fittings) sein, welches eine Verbindung zwischen verschiedenen Elementen des Leitungssystems (also z. B. zwischen zwei Rohren oder zwischen einem Rohr und einer Armatur) schaffen kann.

Das Anschlussstück kann auch Teil einer Armatur mit Absperr-, Regel- und/oder Ventilfunktion sein. Die Armatur kann aus Metall, z. B. aus Messing, Rotguss oder Edelstahl, aber auch aus Kunststoff, z. B. aus Polypropylen (PP), Polyvinylchlorid (PVC) oder technischen Kunststoffen wie Polysulfon (PSU), gefertigt sein.

Bevorzugt weist die Ringnut einen in Ein-/Aufschubrichtung zulaufenden, insbesondere konischen, Abschnitt auf, und die Ringdichtung ist auf diesem Abschnitt verschiebbar. Die Ringnut und die Ringdichtung sind derart ausgebildet, dass die Ringdichtung beim Auf- bzw. Einschieben des zweiten rohrförmigen Teils durch eine Verschiebung auf dem Abschnitt mechanisch vorgespannt wird. Der Abschnitt ist so ausgeformt, dass beim Auf- bzw. Einschieben des zweiten rohrförmigen Teils die Ringdichtung so auf ihm verschoben wird, dass sie gegen das erste rohrförmige Teil gedrückt wird. Aufgrund der (Rest-) Elastizität der aus elastischem Material hergestellten Ringdichtung erfolgt somit eine zuverlässige Abdichtung zwischen dem ersten und dem zweiten rohrförmigen Teil. Der Abstand zwischen Nutgrund und zweitem rohrförmigen Teil und somit der für die Ringdichtung zur Verfügung stehende Raum wird somit in Auf- bzw. Einschubrichtung kleiner. Ist der Abschnitt beispielsweise auf einem Stütznippel angeordnet, so erweitert er sich ausgehend von der Mündung des Stütznippels, so dass beim Aufschieben des zweiten rohrförmigen Teils die Ringdichtung mitgenommen und gegen die Innenwand des zweiten rohrförmigen Teils gedrückt wird.

Durch die zulaufende Form der Ringnut wird die Ringdichtung allmählich verschoben und verformt. Die auf sie letztlich über das ein- bzw. aufgeschobene Rohr ausgeübten Kräfte sind verhältnismässig gering und die mechanischen Belastungen der Ringdichtung sind beschränkt. Anstelle einer konischen kann die Ringnut eine andere in Auf- bzw. Einschieberichtung zulaufende Form aufweisen, z. B. konkav oder konvex geformt sein, oder mehrere hintereinander liegende Abschnitte mit unterschiedlichem Verlauf aufweisen.

Mit Vorteil weist die Ringnut im Bereich des zulaufenden Abschnitts eine widerhakenartige Struktur auf, um eine Bewegung der Ringdichtung zurück in ihre erste Position zu verhindern. Die Ringdichtung kann im Rahmen des Ein- bzw. Aufschiebens des zweiten rohrförmigen Teils verhältnismässig einfach über die widerhakenartige Struktur geschoben werden, wird aber von dieser an einer Rückwärtsbewegung gehindert. Die widerhakenartige Struktur kann einen oder mehrere zahnartige umlaufende Ringe oder beabstandete Zähne aufweisen, welche in Ein- bzw. Aufschieberichtung zunächst verhältnismässig flach ansteigen und dann steil abfallen. Es ist auch möglich, mehrere zahnartige Ringe oder Zähne hintereinander anzuordnen, so dass verschiedenen Rohrdurchmessern Rechnung getragen werden kann.

Statt des zahnartigen Rings oder der Zähne können auch eine Riffelung, eine Mikrostrukturierung oder eine spezielle Materialoberfläche (welche z. B. durch Einbringen von anderem Material hergestellt wird) eingesetzt werden.

Ein Neigungswinkel des zulaufenden Abschnitts der Ringnut liegt mit Vorteil zwischen 3 und 20°, bevorzugt zwischen 5 und 15°. Es hat sich gezeigt, dass derartige Winkel ein weitgehend ungehindertes Ein- bzw. Aufschieben des zweiten rohrförmigen Teils ermöglichen, während gleichzeitig die Ringdichtung ausreichend komprimiert wird. Eine Beschädigung der Ringdichtung wird durch einen derartigen, verhältnismässig flachen Winkel vermieden.

Das erste rohrförmige Teil ist mit Vorteil als Stütznippel ausgebildet, auf welchen das zweite rohrförmige Teil aufschiebbar ist. Dadurch kann eine Abdichtung auf der Innenseite des zweiten rohrförmigen Teils hergestellt werden. Dadurch wird verhindert, dass im Leitungssystem geführtes Fluid zur Stirnseite des zweiten rohrförmigen Teils gelangt. Dies ist besonders bei wasserführenden Verbundrohren von Vorteil, denn ein (ständiger) Wasserkontakt der Stirnseite des Verbundrohrs, an welcher die einzelnen Schichten des Verbundrohrs offen zugänglich sind, birgt die Gefahr einer Delamination des Rohrs.

Besonders für die Verwendung mit Kunststoff- oder reinen Metallrohren können auch Anschlussstücke ohne Stütznippel verwendet werden oder solche, bei welchen die Abdichtung nicht gegenüber dem Stütznippel, sondern gegenüber einem bezüglich des zweiten rohrförmigen Teils aussenliegenden Element stattfindet.

Mit Vorteil ist das Kappenteil lösbar am Stütznippel befestigt, um beispielsweise ein Lösen der Verbindung zu ermöglichen. Es ist nicht zwingend, dass das Lösen zerstörungsfrei erfolgen muss. Das entfernte (und zerstörte) Kappenteil kann auch durch ein neues Kappenteil ersetzt werden, wenn eine neue Verbindung geschaffen werden soll.

Bevorzugt wird das Kappenteil am Stütznippel durch eine Schraubverbindung befestigt. Eine derartige Verbindung ist einfach herstellbar und wieder lösbar und bietet eine hohe Sicherheit. Mit Vorteil umfasst die Schraubkappe aussenseitige Schlüsselflächen, so dass konventionelle Werkzeuge wie z. B. Gabelschlüssel zum Festziehen und Lösen der Kappe eingesetzt werden können.

Alternativ kann das Kappenteil beispielsweise mittels einer Clip-Verbindung am Stütznippel befestigt werden.

Vorzugsweise sind der Stütznippel aus Metall (z. B. Edelstahl oder Rotguss) und das Kappenteil aus Kunststoff gefertigt. Ein Stütznippel aus Metall ermöglicht auch bei kleinem Materialquerschnitt und somit grossem Durchgangsquerschnitt eine sichere Abstützung des zweiten rohrförmigen Teils. Ein Stütznippel aus Metall ist zudem sehr dauerhaft und kann auch mehrfach verwendet werden, während das Kappenteil, insbesondere bei einem zerstörenden Lösevorgang, jeweils ersetzt wird. Kunststoff als Kappenmaterial ermöglicht eine einfache Clipverbindung mit dem Grundkörper.

Eine Kappe aus Kunststoff kann zudem teilweise oder vollständig transparent ausgebildet werden, so dass von aussen unmittelbar sichtbar ist, ob das noch unverbundene Anschlussstück mit den vorgesehenen Ringdichtungen ausgerüstet ist oder ob die Verbindung sicher hergestellt ist (ob das Rohr z. B. vollständig eingeschoben ist). Gegenüber herkömmlichen Lösungen mit radial durchgehenden Sichtöffnungen bietet der Einsatz eines transparenten Kunststoffmaterials einen besseren Schutz des Inneren des Anschlussstücks vor Verschmutzungen oder anderen Beeinträchtigungen.

Die Ringdichtung ist mit Vorteil aus einem Kautschukmaterial (z. B. NBR, EPDM) mit einer Härte von 30 - 95 Shore A, insbesondere von 50 - 75 Shore A, bevorzugt 55 - 65 Shore A, gefertigt. Es hat sich herausgestellt, dass mit einem Material in diesem Härtebereich eine bestmögliche Abdichtung bei grösstmöglichen Rohrtoleranzen erreichbar ist. Die Ringdichtung kann mit einem runden Querschnitt ausgeführt sein, bevorzugt ist sie jedoch im Querschnitt flach, d. h. im eingelegten Zustand ist ihre Dicke (in radialer Richtung) geringer als ihre Breite (in axialer Richtung). Dies ermöglicht eine möglichst flache Ausbildung der Aufnahme für die Ringdichtung und somit desjenigen Elements, in welchem die Aufnahme ausgebildet ist, z. B. des Stütznippels. Entsprechend sind auch grosse Durchgangsquerschnitte erzielbar. Durch die vorhandene axiale Breite ergibt sich gleichzeitig eine sichere Abdichtung. Die Ringdichtung kann im Querschnitt insbesondere rechteckig oder trapezförmig sein, es sind auch asymmetrische Formen denkbar. Sind mehrere axial beabstandete Ringdichtungen vorgesehen, können deren Querschnitte, insbesondere deren Breite, kleiner gewählt werden, als wenn nur eine Ringdichtung vorhanden ist. Um die Gleitfähigkeiten der Ringdichtungen im Bedarfsfall zu steigern, können sie teflonisiert werden.

In einem Anschlussstück für wasserführende Leitungssysteme kann die Ringdichtung aus einem wasserquellbaren Material gefertigt sein, so dass sie beim ersten Kontakt mit dem in der Leitung geführten Wasser aufquillt und die Dichtwirkung verstärkt.

Das Kappenteil ist mit Vorteil im Wesentlichen einstückig. Dies bietet Vorteile bei der Herstellung und der Montage und ermöglicht die Fertigung mechanisch belastbarerer Anschlussstücke als mit mehrteiligen Kappenteilen. Damit der Klemm-/Krallring in ein solches Kappenteil eingebracht werden kann, ist der Aussendurchmesser des Klemm-/Krallrings mit Vorteil verringerbar. Der Klemm-/Krallring kann somit mit verringertem Aussendurchmesser ohne weiteres als Ganzes durch die Rohraufnahmeöffnung axial in das Kappenteil eingeschoben werden. Sobald die Aufnahmenut erreicht ist, wird der Aussendurchmesser des Klemm-/Krallrings erweitert, bis er in der Aufnahmenut aufgenommen ist und beispielsweise auf dem Nutgrund aufliegt.

Damit der Aussendurchmesser geändert werden kann, umfasst der Klemm-/Krallring mit Vorteil mindestens zwei, bevorzugt mindestens drei, Klemmsegmente, welche durch verformbare, insbesondere einfaltbare, Verbindungsabschnitte miteinander verbunden sind. Die Verbindungsabschnitte können plastisch oder elastisch verformt werden. Im Fall plastischer Abschnitte kann der Klemm-/Krallring manuell zusammengedrückt werden. Sobald er anschliessend in die Position der Aufnahmenut verschoben worden ist, entfalten sich die Verbindungsabschnitte bis der Klemm-/Krallring seine Position in der Aufnahmenut eingenommen hat. Besonders bei plastisch verformbaren Abschnitten ist mit Vorteil ein Werkzeug vorgesehen, mit welchem der Klemm-/Krallring in seine Form mit grossem Aussendurchmesser verformt werden kann.

Der Klemm-/Krallring umfasst bevorzugt ein Krallelement aus Metall, welches einstückig mit den Verbindungsabschnitten ausgeführt ist. Die Klemmsegmente sind am Krallelement befestigt und beispielsweise aus Kunststoff gefertigt. Ein metallischer Werkstoff ermöglicht die Herstellung von scharfen Kanten, die in das zu befestigende Rohr eindringen können, sowie von dauerhaften elastischen oder plastischen Verbindungsabschnitten. Klemmsegmente aus Kunststoff lassen sich besonders einfach herstellen (z. B. durch ein Spritzgussverfahren) und schonen die Aussenseite des zweiten Rohrteils. Die Befestigung der Klemmsegmente am Krallelement erfolgt beispielsweise durch eine Klebung oder durch ein Anspritzen des Kunststoffteils.

Alternativ können die Verbindungsabschnitte einstückig mit den Klemmsegmenten ausgeführt sein, während mehrere Krallelemente an den Klemmsegmenten befestigt sind. Es kann auch ein einteiliger Klemm-/Krallring aus Metall oder Kunststoff zum Einsatz kommen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1A, B: Schematische Querschnittdarstellungen eines Anschlussstücks;
- Fig. 2: eine schematische Querschnittdarstellung eines Fittings mit Anschlussstücken gemäss einer ersten Ausführungsform;
- Fig. 3A, B: schematische Querschnittdarstellungen einer zweiten Ausführungsform;
- Fig. 4: eine schematische Querschnittdarstellung einer ersten Nutkontur;
- Fig. 5: eine schematische Querschnittdarstellung einer zweiten Nutkontur;
- Fig. 6A, B: eine erste Variante einer im Rahmen eines erfindungsgemässen Anschlussstücks verwendbaren Formdichtung im Querschnitt und in einer Schrägansicht;
- Fig. 7A, B: eine zweite Variante einer im Rahmen eines erfindungsgemässen Anschlussstücks verwendbaren Formdichtung im Querschnitt und in einer Schrägansicht;
- Fig. 8A, 8B: Schrägbilder einer ersten Variante eines Klemm-/Krallrings in einer Konfiguration mit reduziertem und maximalem Aussendurchmesser;
- Fig. 9: ein Schrägbild eines Klemm-/Krallrings; und
- Fig. 10A-C: ein Schrägbild, eine Draufsicht und einen Querschnitt einer dritten Variante eines im Rahmen eines erfindungsgemässen Anschlussstücks verwendbaren Klemm-/Krallrings.

Grundsätzlich sind in den Figuren gleiche Teile mit gleichen Bezugszeichen versehen.

### Wege zur Ausführung der Erfindung

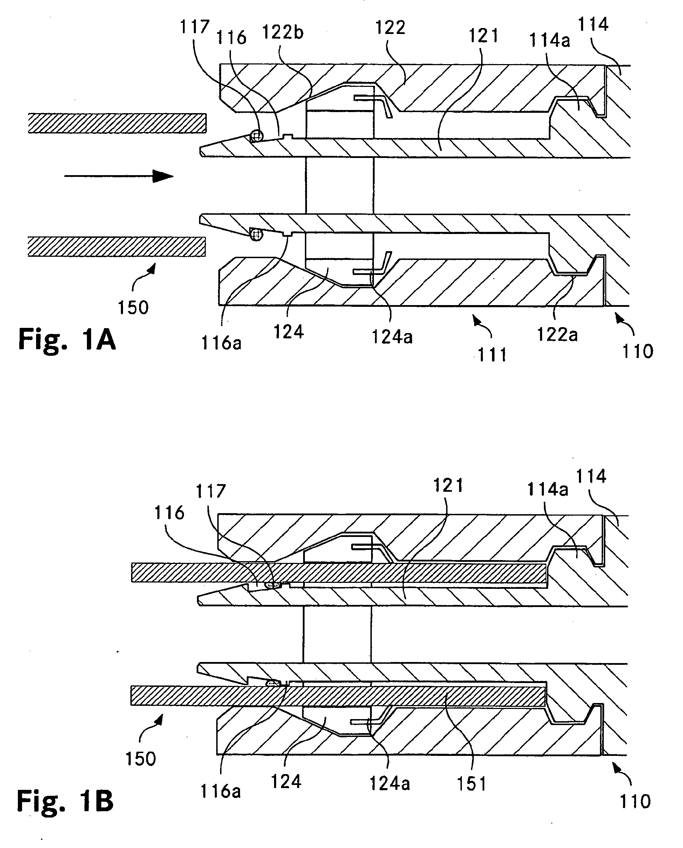

Die Figuren 1A, 1B zeigen schematische Cluerschnittdarstellungen eines Anschlussstücks vor und nach dem Einschieben eines anzuschliessenden Leitungsrohrs. Dieses Anschlussstück ist nicht erfindungsgemäss, dessen Beschreibung ist aber hilfreich für das Verständnis der Erfindung. Dargestellt ist ein Bauelement 110 mit einem Anschlussstück 111, welches zur Aufnahme eines Endes eines Rohrs 150 geeignet ist. Das Anschlussstück 111 umfasst einen Nippel 121, dessen Aussendurchmesser im Wesentlichen dem Innendurchmesser des zu befestigenden Rohrs 150 entspricht, sowie eine konzentrische Hülse 122, deren Innendurchmesser im Wesentlichen dem Aussendurchmesser des Rohrs 150 entspricht. Die Hülse 122 ist an ihrem hinteren Ende am Gehäuse 114 des Bauelements 110 befestigt. Zu diesem Zweck ist am Gehäuse 114 eine hinterschnittene Profilierung 114a ausgebildet, auf welche eine entsprechende Ausnehmung 122a der Hülse 122 aufgeschoben ist.

Die Hülse 122 weist in ihrem vorderen Teil, nahe ihrem freien Ende eine ringförmige Ausnehmung 122b mit ungefähr trapezförmigem Querschnitt auf. In dieser Ausnehmung 122b ist ein Klemmring 124 gehalten. Dessen Aussenkontur entspricht dem Innenquerschnitt der Ausnehmung 122b. Der Klemmring 124 ist somit im Wesentlichen axial unverschiebbar in der Ausnehmung 122b gehalten. An der hinteren Endfläche des Klemmrings 124 sind mehrere Krallen 124a angeordnet, welche sich nach innen, in den Zwischenraum zwischen dem Klemmring 124 bzw. der Hülse 122 einerseits und dem Nippel 121 andererseits, erstrecken. Die freien Enden der Krallen 124a sind leicht nach hinten, auf das Gehäuse 114 des Bauelements 110 zu gerichtet.

Das freie Ende des Nippels 121 am Eingang des Anschlussstücks 111 des Bauelements 110 ist konisch geformt. Dahinter schliesst sich nach stufenartiger Verjüngung ein zweiter konischer Abschnitt 116 an, in welchem sich der Aussenquerschnitt des Nippels 121 in Richtung auf das Gehäuse 114 des Bauelements 110 erweitert. Der zweite konische Abschnitt 116 ist an seinem hinteren Ende durch eine einen Anschlag bildende ringförmige Erhebung 116a abgeschlossen. In diesem konischen Abschnitt 116 zwischen der Stufe und der Erhebung 116a ist eine ringförmige Dichtung 117 aus elastischem Material axial verschiebbar angeordnet. Die Dichtung 117 befindet sich in axialer Richtung vor dem Klemmring 124.

Das Ende 151 des Rohrs 150 kann zur Befestigung am Bauelement 110 zwischen dem Nippel 121 und der Hülse 122 eingeführt werden. Das Einführen wird durch die konische Ausbildung des freien Endes des Nippels 121 unterstützt. Beim Einschieben kontaktiert das Rohr 150 zunächst die Dichtung 117 und nimmt diese in Einschubrichtung mit. Die Dichtung 117 wird aufgrund der konischen Form des Abschnitts 116 radial nach aussen gegen das Rohr 150 gedrückt und somit komprimiert. Als Nächstes gelangt das Rohr 150 in Kontakt mit den Krallen 124a des Klemmrings 124. Weil deren freie Enden schräg in Einschubrichtung weisen, werden die Krallen 124a beim weiteren Einschieben elastisch verformt und behindern das Einschieben kaum. Ein Zurückziehen des von den Krallen 124a erfassten Rohrs 150 ist aber nur noch mit ausserordentlichem Kraftaufwand möglich.

Die Endstellung des eingeschobenen Rohrs 150 ist in der Figur 1B dargestellt: Das Rohr 150 schlägt an der Profilierung 114a des Gehäuses 114 an, und die Dichtung 117 ist bis zur Erhebung 116a aufgeschoben und entsprechend stark komprimiert (vorgespannt), so dass eine zuverlässige Abdichtung zwischen dem Nippel 121 und dem Rohr 150 gebildet ist.

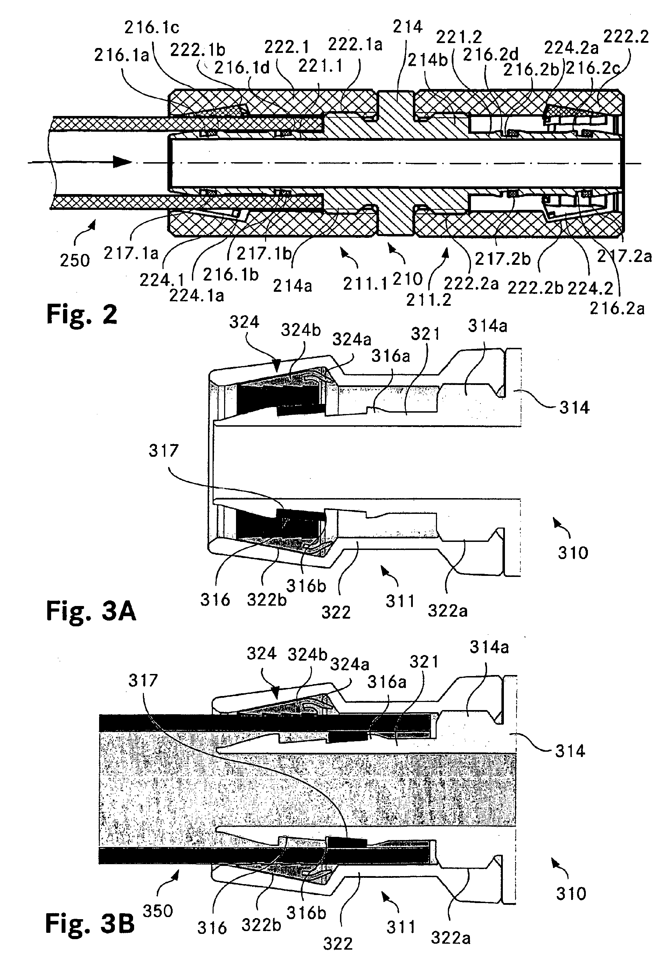

Die Figur 2 zeigt eine schematische Querschnittdarstellung eines Fittings mit Anschlussstücken gemäss einer ersten Ausführungsform eines erfindungsgemässen Anschlussstücks. Dargestellt ist das Fitting 210 mit zwei Anschlussstücken 211.1, 211.2, welche je zur Aufnahme eines Endes eines Rohrs 250 geeignet sind. Das Fitting umfasst einen Grundkörper 214 aus rostfreiem Stahl, an welchem zur Bildung der Anschlussstücke 211.1, 211.2 beidseitig symmetrisch Nippel 221.1, 221.2 angeformt sind, deren Aussendurchmesser im Wesentlichen dem Innendurchmesser des zu befestigenden Rohrs 250 entsprechen. Von der Öffnung des ersten Nippels 221.1 bis zur Öffnung des zweiten Nippels 221.2 wird ein durchgehender, gerade verlaufender Leitungsabschnitt mit konstantem Querschnitt gebildet. Dieser Durchgangsquerschnitt ist aufgrund des verwendeten Materials und der flachen Geometrie sehr weit und kann ca. 55% des Innenquerschnitts des Rohrs 250 betragen. Ebenfalls Teil der Anschlussstücke 211.1, 211.2 sind Kappen 222.1, 222.2 aus Kunststoff, deren Innendurchmesser im Wesentlichen dem Aussendurchmesser des Rohrs 250 entsprechen. Die Kappen 222.1, 222.2 sind an ihren hinteren Enden am Grundkörper 214 des Fittings 210 befestigt. Zu diesem Zweck sind am Grundkörper 214 hinterschnittene Profilierungen 214a, 214b ausgebildet, auf welche entsprechende Ausnehmungen 222.1a, 222.2a der Kappen 222.1, 222.2 aufgeschoben sind.

Die Kappen 222.1, 222.2 weisen in ihrem vorderen Teil, nahe ihrer freien Enden je eine ringförmige Ausnehmung 222.1 b, 222.2b auf. Deren Querschnitt erweitert sich ausgehend von deren öffnungsseitigen Enden zunächst allmählich unter einem Winkel von ca. 15° und verengt sich dann unter einem steilen Winkel von ca. 80°. In diesen Ausnehmungen 222.1 b, 222.2b sind Klemmringe 224.1, 224.2 gehalten. Deren Aussenkontur entspricht im Wesentlichen dem Innenquerschnitt der Ausnehmungen 222.1 b, 222.2b. Die Klemmringe 224.1, 224.2 umfassen Klemmsegmente 224.1 b, 224.2b, deren Innenflächen derart geformt sind, dass sie den Aussenmantel des Rohrs 250 grossflächig kontaktieren können, um zwischen der jeweiligen Kappe 222.1, 222.2 und dem Rohr 250 eine Klemmwirkung zu erzeugen. Die Klemmringe 224.1, 224.2 sind entlang der Böden der Ausnehmungen 222.1 b, 222.2b in axialer Richtung verschiebbar, wobei sie aufgrund der Geometrie der Ausnehmungen 222.1 b, 222.2b bei einer Verschiebung gegen die Einschubrichtung auf das Rohr 250 zu bewegt werden und sich zwischen der Kappe 222.1, 222.2 und dem Rohr 250 verklemmen.

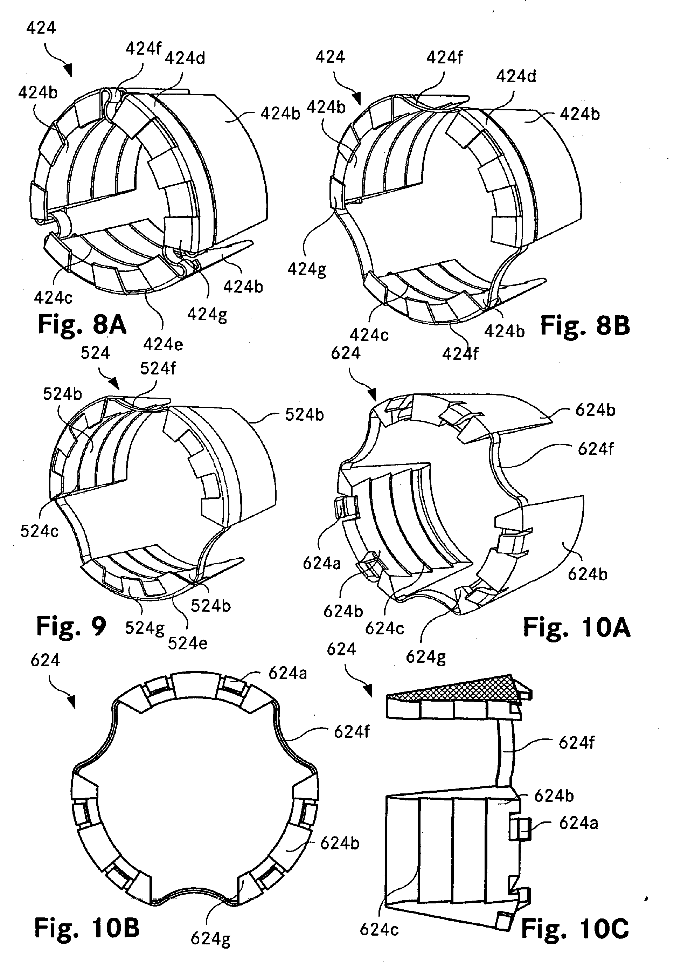

An den hinteren Endflächen der Klemmringe 224.1, 224.2 sind mehrere Krallen 224.1a, 224.2a angeordnet, welche sich nach innen, in den Zwischenraum zwischen den Klemmringen 224.1, 224.2 bzw. der Kappe 222.1, 222.2 einerseits und den Nippeln 221.1, 221.2 andererseits, erstrecken. Die freien Enden der Krallen 224.1a, 224.2a sind leicht nach hinten, auf den Grundkörper 214 des Fittings 210 zu gerichtet. Im Rahmen dieser Ausführungsform einsetzbare Klemmringe sind weiter unten, im Zusammenhang mit den Figuren 8-10 eingehender beschrieben.

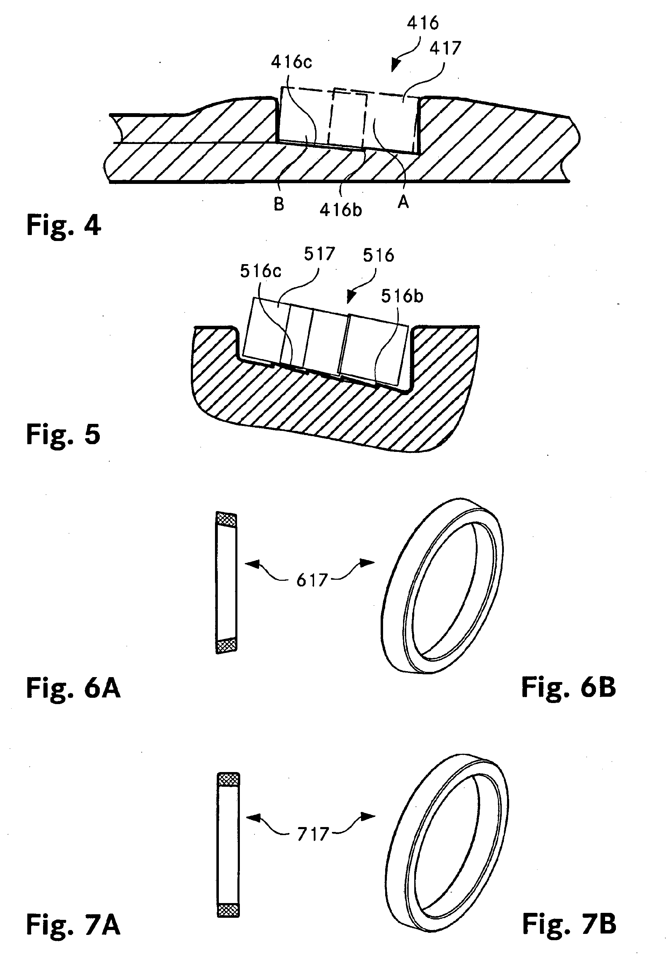

Die freien Enden der Nippel 221.1, 221.2 am Eingang der Anschlussstücke 211.1, 211.2 des Fittings 210 sind konisch geformt. Dahinter schliessen sich nach stufenartiger Verjüngung jeweils zweite konische Abschnitte 216.1a, 216.2a (axial vor dem Klemmring 224.1, 224.2) und dritte konische Abschnitte 216.1b, 216.2b (axial hinter dem Klemmring 224.1, 224.2) an, in welchem sich der Aussenquerschnitt der Nippel 221.1, 221.2 in Richtung auf den Grundkörper 214 des Fittings 210 erweitert. Diese weiteren konischen Abschnitte 216.1a, 216.1b, 216.2a, 216.2b sind an ihren hinteren Enden durch Anschläge bildende ringförmige Erhebungen 216.1c, 216.1d, 216.2c, 216.2d abgeschlossen. In den weiteren konischen Abschnitten 216.1a, 216.1b, 216.2a, 216.2b zwischen den Stufen und den Erhebungen 216.1 c, 216.1 d, 216.2c, 216.2d sind Formdichtungen 217.1 a, 217.1 b, 217.2a, 217.2b aus elastischem Material axial verschiebbar angeordnet. Mögliche Nutkonturen und Formdichtungen sind weiter unten im Zusammenhang mit den Figuren 4 und 5 bzw. 6 und 7 eingehender beschrieben.

Das Ende des Rohrs 250 kann zur Befestigung am Fitting 210 zwischen einem der Nippel 221.1, 221.2 und der entsprechenden Kappe 222.1, 222.2 eingeführt werden. Das Einführen wird durch die konische Ausbildung der freien Enden der Nippel 221.1, 221.2 unterstützt. Beim Einschieben kontaktiert das Rohr 250 zunächst die Dichtungen 217.1a, 217.1b, 217.2a, 217.2b und nimmt diese in Einschubrichtung mit. Die Dichtungen 217.1a, 217.1b, 217.2a, 217.2b werden aufgrund der konischen Form der Abschnitte 216.1a, 216.1b, 216.2a, 216.2b radi al nach aussen gegen das Rohr 250 gedrückt und somit komprimiert. Aufgrund von widerhakenartigen Strukturen am Grund der konischen Abschnitte 216.1a, 216.1 b, 216.2a, 216.2b (siehe Figuren 4, 5) werden die Dichtungen 217.1a, 217.1b, 217.2a, 217.2b in der durch das Vorschieben erreichten Position gehalten.

Das Rohr 250 gelangt beim Einschieben zudem in Kontakt mit den Krallen 224.1a, 224.2a der Klemmringe 224.1, 224.2. Weil deren freie Enden schräg in Einschubrichtung weisen, werden die Krallen 224.1 a, 224.1b beim weiteren Einschieben elastisch verformt und behindern das Einschieben kaum. Ein Zurückziehen des von den Krallen 224.1a, 224.1b erfassten Rohrs 250 ist aber nur noch mit ausserordentlichem Kraftaufwand möglich, zumal das Zurückziehen dazu führt, dass die Klemmringe 224.1, 224.2 mit dem Rohr 250 axial zurückgezogen werden und somit aufgrund des konischen Profils der Ausnehmungen 222.1 b, 222.2b zusätzlich gegen des Rohr 250 gedrückt werden, was die Klemmwirkung verstärkt.

Das Fitting 210 kann mehrfach verwendet werden, wobei zum Entfernen des von ihm gehaltenen Rohrs 250 die entsprechende Kappe 222.1 aus Kunststoff weggebrochen und zur Herstellung einer neuen Verbindung durch eine neue Kappe ersetzt werden kann. Gegebenenfalls sind auch die Dichtungen 217.1 a, 217.1 b, 217.2a, 217.2b zu ersetzen.

Die Figuren 3A und 3B sind schematische Querschnittdarstellungen einer zweiten Ausführungsform, vor und nach dem Einschieben eines anzuschliessenden Leitungsrohrs. Dargestellt ist wiederum ein Bauelement 310 mit einem Anschlussstück 311, welches zur Aufnahme eines Endes eines Rohrs 350 geeignet ist. Das Anschlussstück umfasst einen Nippel 321, dessen Aussendurchmesser im Wesentlichen dem Innendurchmesser des zu befestigenden Rohrs 350 entspricht, sowie eine konzentrische hülsenartige Kappe 322, deren Innendurchmesser im Wesentlichen dem Aussendurchmesser des Rohrs 350 entspricht. Die Kappe 322 ist an ihrem hinteren Ende am Gehäuse 314 des Bauelements 310 befestigt. Zu diesem Zweck ist am Gehäuse eine hinterschnittene Profilierung 314a ausgebildet, auf welche eine entsprechende Ausnehmung 322a der Kappe 322 aufgeschoben ist.

Die Kappe 322 weist in ihrem vorderen Teil, nahe ihrem freien Ende eine ringförmige Ausnehmung 322b auf. Deren Querschnitt erweitert sich ausgehend von deren öffnungsseitigen Enden zunächst allmählich unter einem Winkel von ca. 10° und verengt sich dann unter einem steilen Winkel von ca. 65°. In dieser Ausnehmung 322b ist ein Klemmring 324 aus Kunststoff gehalten. Dessen Aussenkontur entspricht dem Innenquerschnitt der Ausnehmung 322b. Der Klemmring 324 umfasst Klemmsegmente 324b, deren Innenflächen derart geformt sind, dass sie den Aussenmantel des Rohrs 350 grossflächig kontaktieren können, um zwischen der Kappe 322 und dem Rohr 350 eine Klemmwirkung zu erzeugen. An den Innenflächen der Klemmsegmente 324b sind zudem widerhakenartige Strukturen ausgebildet, die eine Einschubbewegung ermöglichen, sich bei einem Zurückziehen aber im Aussenmantel des Rohrs 350 verfangen. An der hinteren Endfläche des Klemmrings 324 sind mehrere Federelemente 324a angeformt, welche sich im Wesentlichen in axialer Richtung erstrecken und in dieser Richtung als Druckfeder wirken können. Der Klemmring ist weiter unten, im Zusammenhang mit der Figur 10 eingehender beschrieben.

Das freie Ende des Nippels 321 am Eingang des Anschlussstücks 311 des Bauelements 310 ist konisch geformt. Dahinter schliesst sich nach stufenartiger Verjüngung ein zweiter konischer Abschnitt 316 an, in welchem sich der Aussenquerschnitt des Nippels 321 in Richtung auf das Gehäuse 314 des Bauelements 310 erweitert. Der zweite konische Abschnitt 316 ist an seinem hinteren Ende durch eine einen Anschlag bildende ringförmige Erhebung 316a abgeschlossen. In der Mitte des konischen Abschnitts 316 ist eine in Richtung auf das Gehäuse 314 steil abfallende Stufe 316b ausgebildet. Vor dem Einschieben des Rohrs 350 befindet sich eine Formdichtung 317 aus elastischem Material (NBR, EPDM) innerhalb desjenigen Bereichs des konischen Abschnitts 316, welcher vor der Stufe 316b liegt (siehe Figur 3A).

Das Ende des Rohrs 350 kann zur Befestigung am Bauelement 310 zwischen dem Nippel 321 und der Kappe 322 eingeführt werden. Das Einführen wird durch die konische Ausbildung des freien Endes des Nippels 321 unterstützt. Beim Einschieben kontaktiert das Rohr 350 zunächst die Dichtung 317 und nimmt diese in Einschubrichtung mit. Die Dichtung 317 wird aufgrund der konischen Form des Abschnitts 316 radial nach aussen gegen das Rohr 150 gedrückt und somit komprimiert. Eine Rückbewegung der Dichtung 317 wird nach dem Passieren der Stufe 316b durch die steile Stufenwand verhindert. Beim Einschieben gelangt das Rohr 350 auch in Kontakt mit den Klemmsegmenten 324b des Klemmrings 324 und nimmt den Klemmring 324 in axialer Richtung mit, unter Überwindung der Federkraft der Federelemente 324a.

Die Endstellung des eingeschobenen Rohrs 350 ist in der Figur 3B dargestellt: Das Rohr 350 schlägt an der Profilierung 314a des Gehäuses 314 an, und die Dichtung 317 ist bis zur Erhebung 316a aufgeschoben, entsprechend stark komprimiert (vorgespannt) und gegen ein Zurückrutschen durch die Stufe 316b gesichert, so dass eine zuverlässige Abdichtung zwischen dem Nippel 321 und dem Rohr 350 gebildet ist. Die Federelemente 324a gewährleisten eine ständige Klemmwirkung zwischen dem Klemmring 324 und dem Rohr 350 und damit eine ständige Kompression der Dichtung 317.

Die Figur 4 ist eine schematische Querschnittdarstellung einer ersten Nutkontur. Die Nut 416 umfasst einen im Wesentlichen konischen Nutgrund 416c, in welchem eine Stufe 416b ausgebildet ist. Die Formdichtung 417 wird beim Aufschieben eines Rohrs aus einer ersten Position A in eine zweite Position B verschoben, wobei sich die Dichtung 417 in der zweiten Position B vollständig hinter der Stufe 416b befindet und somit nicht mehr ohne Weiteres gegen die Einschubrichtung zurück rutschen kann. Im dargestellten Beispiel beträgt die Gesamtlänge der Nut 2.5 mm, von denen der hintere Abschnitt entsprechend der Breite der Formdichtung 1.55 mm ausmacht. Die Tiefe der Nut 416 beträgt an deren vorderen Ende 1.0 mm, an deren hinteren Ende noch 0.70 mm; der Neigungswinkel beträgt im vorderen Abschnitt ca. 6.7°, im hinteren Abschnitt ca. 5.6°. Die Höhe der Stufe 416 beträgt ca. 0.1 mm.

Die Figur 5 ist eine schematische Querschnittdarstellung einer zweiten Nutkontur. Diese Nut 516 umfasst wiederum einen im Wesentlichen konischen Nutgrund 516c, in welchem nun aber insgesamt vier axial beabstandete Stufen 516b ausgebildet sind. Auch hier wird die Formdichtung beim Aufschieben eines Rohrs aus einer ersten Position im tiefsten Bereich der Nut 516 in eine zweite Position verschoben, wobei sich die Dichtung 517 in der zweiten Position vollständig hinter zumindest einer der Stufen 516b befindet und somit nicht mehr ohne Weiteres gegen die Einschubrichtung zurück rutschen kann. Wie weit die Dichtung verschoben wird, ist insbesondere vom Aussenquerschnitt des eingeschobenen Rohrs abhängig. Der mehrstufige Nutgrund 516c ermöglicht auf diese Weise eine Anpassung an unterschiedliche Rohrquerschnitte. Im dargestellten Beispiel beträgt die Gesamtlänge der Nut wiederum 2.5 mm, welche durch die vier Stufen 516b in fünf gleich lange Abschnitte von 0.5 mm unterteilt wird. Die Tiefe der Nut 516 beträgt an deren vorderen Ende 1.0 mm, an deren hinteren Ende nur noch 0.50 mm; der Neigungswinkel des Nutgrunds 516c beträgt im vordersten Abschnitt ca. 17.3°, nimmt dann von Abschnitt zu Abschnitt graduell ab und beträgt im letzten Abschnitt noch ca. 11.8°. Die Höhe jeder der Stufen beträgt je ca. 0.05 mm.

Die Figuren 6A, 6B zeigen eine erste Variante einer im Rahmen eines erfindungsgemässen Anschlussstücks verwendbaren Formdichtung 617 im Querschnitt und in einer Schrägansicht. Die Dichtung besteht aus EPDM und hat einen konischen Innen- und Aussenquerschnitt mit einem Öffnungswinkel von 11.8°, angepasst an eine Ringnut mit einem entsprechenden Neigungswinkel. Der Innendurchmesser der gezeigten Formdichtung beträgt 9.5 mm, die (axiale) Breite 1.5 mm und die (radiale) Dicke 1.0 mm.

Die Figuren 7A, 7B zeigen eine zweite Variante einer im Rahmen eines erfindungsgemässen Anschlussstücks verwendbaren Formdichtung 717 im Querschnitt und in einer Schrägansicht. Auch diese Dichtung besteht aus EPDM. Sie hat im Gegensatz zur vorher beschriebenen Formdichtung 617 einen zylindrischen Innen- und Aussenquerschnitt. Der Innendurchmesser der gezeigten Formdichtung beträgt wiederum 9.5 mm, die (axiale) Breite 1.5 mm und die (radiale) Dicke 1.0 mm.

Die Figuren 8A, 8B zeigen Schrägbilder einer ersten Variante eines Klemm-/Krallrings in einer Konfiguration mit reduziertem und maximalem Aussendurchmesser. Der Klemm-/Krallring 424 umfasst drei drehsymmetrisch angeordnete Klemmsegmente 424b aus Kunststoff. Die Innenfläche der Klemmsegmente 424b entspricht jeweils einem Zylindersegmentmantel mit einem Segmentwinkel von ca. 70°. Die Aussenfläche entspricht einem Kegelstumpfsegment mit dem entsprechenden Segmentwinkel. Der Kegelwinkel beträgt ca. 10° und ist dem Querschnitt der ringförmigen Aufnahme für den Klemm-/Krallring 424 angepasst. Die Innenfläche der Klemmsegmente 424b weist mehrere bezüglich der Symmetrieachse des Klemm-/Krallrings 424 tangential verlaufende, hervortretende Rippen 424c auf, welche sägezahnartig ausgebildet sind.

Die Klemmsegmente 424b sind an ihrer Stirnseite grösseren Querschnitts an einem Krallring 424d aus Metall angeklebt. Der Krallring 424d umfasst drei segmentartige Abschnitte 424e, deren Segmentwinkel dem Segmentwinkel der Klemmsegmente 424b entspricht, und drei plastisch verformbare Verbindungsstege 424f, welche jeweils zwei der segmentartigen Abschnitte 424e verbinden. Die segmentartigen Abschnitte 424e weisen jeweils mehrere beabstandete Krallen 424g auf, welche radial nach innen weisen und bis in den Freiraum innerhalb der Klemmsegmente 424b reichen. Die Verbindungsstege 424f sind einstückig mit den segmentartigen Abschnitten 424e ausgebildet und an den Übergängen zu den segmentartigen Abschnitten 424e jeweils leicht nach innen gebogen. Wird der Klemm-/Krallring 424 radial zusammengedrückt, falten sich die Verbindungsstege 424f schlaufenartig radial nach innen, so dass der Aussendurchmesser des Klemm-/Krallrings 424 im Wesentlichen noch durch die drei Klemmsegmente 424b bestimmt und entsprechend verkleinert wird (siehe Figur 8A).

In diesem Zustand mit reduziertem Aussendurchmesser kann der Klemm-/Krallring 424 ohne weiteres zwischen dem Nippel und der Kappe in ein Anschlussstück eingeführt werden (vergleiche Figuren 1 - 3). Sobald die axiale Position der ringförmigen Aufnahme für den Klemm-/Krallring 424 erreicht ist, wird der Klemm-/Krallring 424 mittels eines Werkzeugs erweitert, bis die Aussenflächen der Klemmsegmente 424b an den Begrenzungen der Aufnahme anliegen. Aufgrund der radialen Flexibilität kann der Klemm-/Krallring 424 zudem ohne weiteres axial entlang der ihn aufnehmenden, konischen Ausnehmung verschoben werden. Die Figur 8B zeigt den Klemm-/Krallring 424 in seiner Konfiguration mit maximalem Durchmesser, in welcher die Verbindungsstege 424f fast ganz gestreckt sind.

Die Figur 9 zeigt ein Schrägbild einer zweiten Variante eines Klemm-/Krallrings 524. Der Klemm-/Krallring 524 entspricht weitgehend der in den Figuren 8A, 8B dargestellten Variante und hat dieselbe Funktionalität. Der Klemm-/Krallring 524 umfasst wiederum drei drehsymmetrisch angeordnete Klemmsegmente 524b aus Kunststoff, deren Geometrie identisch ist mit den in den Figuren 8A, 8B dargestellten Klemmsegmenten. Die Innenfläche der Klemmsegmente 524b weist ebenfalls wiederum tangentiale, sägezahnartige Rippen 424c auf.

Jeweils zwei der Klemmsegmente 524b sind durch einen elastischen Verbindungssteg 524f miteinander verbunden, wobei die Verbindungsstege 524f bei dieser Ausführungsform einstückig mit den Klemmsegmenten 524b ausgebildet sind. Auf jedes der Klemmsegmente 524b ist überdies an deren Stirnseite grösseren Querschnitts ein Krallsegment 524e angeklebt, dessen Segmentwinkel dem Segmentwinkel des entsprechenden Klemmsegments 524b entspricht. Die Krallsegmente 524e weisen jeweils mehrere beabstandete Krallen 524g auf, welche radial nach innen weisen und bis in den Freiraum innerhalb der Klemmsegmente 524b reichen. Die Geometrie der Verbindungsstege 524f entspricht der Geometrie der im Zusammenhang mit den Figuren 8A, 8B dargestellten Verbindungsstegen 424f. Die Funktionsweise ist weitgehend identisch, mit der Ausnahme, dass die Verbindungsstege 524f elastisch verformbar sind und sie sich somit beim Erreichen der Aufnahmeposition für den Klemm-/Krallring 524 automatisch entspannen und die Klemmsegmente 524b radial nach aussen in die Aufnahmen drücken.

Die Figuren 10A-C zeigen ein Schrägbild, eine Draufsicht und einen Querschnitt einer dritten Variante eines im Rahmen eines erfindungsgemässen Anschlussstücks verwendbaren Klemm-/Krallrings. Dieser Klemm-/Krallring 624 ist im Gegensatz zu den vorstehend beschriebenen Varianten einstückig aus Kunststoff ausgebildet. Er umfasst wiederum drei drehsymmetrisch angeordnete Klemmsegmente 624b aus Kunststoff, deren Geometrie identisch ist mit den in den Figuren 8A, 8B und 9 dargestellten Klemmsegmenten. Die Innenfläche der Klemmsegmente 624b weist ebenfalls wiederum tangentiale, sägezahnartige Rippen 624c auf.

Wiederum sind jeweils zwei der Klemmsegmente 624b durch einen elastischen Verbindungssteg 624f miteinander verbunden. Die Geometrie und Funktionsweise der Verbindungsstege 624f entsprechen der Geometrie und Funktionsweise der im Zusammenhang mit der Figur 9 dargestellten Verbindungsstege 524f. Im Gegensatz zu den vorstehenden Varianten sind nun die Krallen 624g direkt an den Stirnseiten der Klemmsegmente 624b angeformt. Die Krallen 624g weisen wieder radial nach innen und reichen bis in den Freiraum innerhalb der Klemmsegmente 624b. Zusätzlich zu den Krallen 624g sind an den Stirnseiten der Klemmsegmente 624b zudem als schräg vorstehende Laschen 624a ausgebildete federartige Elemente angeformt, welche axial über die Stirnseite vorstehen und nach Kontakt eines axialen Anschlags der weiteren axialen Bewegung eine gewisse Federkraft entgegensetzen. Nach Einschieben eines Rohrs gewährleisten diese Laschen 624a eine zuverlässige Klemm- und Krallwirkung zwischen dem Klemm-/Krallring 624 und dem eingeschobenen Rohr.

Es ist zu beachten, dass weitere Varianten von Klemm-/Krallringen denkbar sind. So können bei allen dargestellten Varianten anstelle elastischer Verbindungsstege plastische Verbindungsstege vorgesehen werden oder umgekehrt. Es ist auch denkbar, einen Klemm-/Krallring ganz aus Metall zu fertigen, d. h. die Klemmsegmente ebenfalls aus Metall und gegebenenfalls einstückig mit den Krallsegmenten bzw. dem Krallring auszubilden. An die jeweiligen Bedürfnisse angepasst werden kann auch die Geometrie der verschiedenen Elemente des Klemm-/Krallrings, so können die Krallen je nach Rohrdimensionen und - material verschieden ausgebildet werden oder es werden zwei oder mehr als drei Klemmsegmente vorgesehen.

Die vorstehend beschriebenen Anschlussstücke, Nutgeometrien, Formdichtungen und Klemm-/Krallringe lassen sich grundsätzlich auf verschiedenste Art und Weise kombinieren, um den jeweiligen Umständen Rechnung zu tragen. Die Erfindung ist nicht auf die spezifisch beschriebenen Ausführungsformen beschränkt.

Die vorstehend beschriebenen Aspekte des Klemm-/Krallrings können mit grossem Vorteil auch im Rahmen eines Anschlussstücks realisiert werden, welches keine aufschiebbaren Dichtungen umfasst.

Neben den dargestellten Merkmalen kann ein erfindungsgemässes Anschlussstück weitere Funktionalitäten realisieren. Die Kappen können beispielsweise ganz oder teilweise aus einem transparenten oder teilweise transparenten Kunststoff gefertigt sein, so dass das Vorhandensein der Formdichtung bzw. der Formdichtungen und die Position eines eingeschobenen Rohrs ohne weiteres von aussen erkennbar sind. Trotzdem ist das Innere der Kappen stets gegen das Eintreten von Schmutz geschützt. Das Anschlussstück kann ebenfalls zusätzlich mit einer (an sich bekannten) Sicherung versehen sein, welche nach dem Einschieben des Rohrs bzw. der Rohre zu betätigen ist und eine zusätzliche Sicherung gegen axiale Rückzugskräfte bietet.

Im Weiteren ist es möglich, in eine Ringnut neben der Formdichtung weitere Funktionselemente einzusetzen, z. B. Elemente, welche die vom Rohr beim Einschieben auf sie ausgeübten Kräfte auf die Formdichtung übertragen. Dadurch lassen sich je nach Geometrie die auf die Dichtung wirkenden Kräfte optimieren und/oder Beschädigungen durch den Kontakt zwischen der Rohrkante und der Dichtung vermeiden.

Das erste Bauelement bzw. der Grundkörper eines Fittings können aus Metallen (INOX, Rotguss etc.) aber auch aus Kunststoffen (z. B. PPSU) oder aus Verbundwerkstoffen gefertigt werden. Die Kappen und Hülsen können statt aus Kunststoff ebenfalls aus Metall gefertigt werden. Um eine zusätzliche Abdichtsicherheit zu gewährleisten, können die Formdichtungen aus formquellbarem Material gefertigt werden, welches beim Erstkontakt mit Wasser aufquillt.

Zusammenfassend ist festzustellen, dass durch die Erfindung ein Anschlussstück geschaffen wird, welches einfach aufgebaut ist und eine stabile mechanische Verbindung sowie eine sichere Abdichtung gegen den Austritt des transportierten Fluids ermöglicht.

## Patentansprüche

1. Anschlussstück (211.1, 211.2; 311) mit einem ersten rohrförmigen Teil (221.1, 221.2; 321), welches mit einem zweiten rohrförmigen Teil (250; 350) eines fluidführenden Leitungssystems fluiddicht verbindbar ist, wobei
a) das Anschlussstück (211.1, 211.2; 311) derart ausgebildet ist, dass eines der rohrförmigen Teile (221.1, 221.2; 321) in verbundenem Zustand teilweise vom anderen rohrförmigen Teil (250; 350) umschlossen ist,
b) im ersten rohrförmigen Teil (221.1, 221,2; 321) an einer in verbundenem Zustand das zweite rohrförmige Teil (250; 350) kontaktierenden Fläche eine Ringnut (216.1a, 216.1b, 216.2a, 216.2b; 316; 416; 516) ausgespart ist, in welche eine Ringdichtung (217.1a, 217.1b, 217.2a, 217.2b; 317; 617, 717) eingebracht ist,
c) das Anschlussstück (211.1, 211.2; 311) derart ausgebildet ist, dass das zweite rohrförmige Teil (250; 350) durch Aufschieben auf den ersten Teil (221.1, 221.2; 321) bzw. durch Einschieben in den ersten Teil in einer Ein-/Aufschubrichtung im Sinn einer Steckverbindung mit dem ersten rohrförmigen Teil verbindbar ist;
d) das Anschlussstück ein Kappenteil (222.1, 222.2; 322) umfasst, welches das zweite rohrförmige Teil (250; 350) in verbundenem Zustand teilweise umschliesst;
e) das Anschlussstück (211.1, 211.2; 311) einen Klemm-/Krallring (224.1, 224.2; 324; 424; 524; 624) umfasst, zum axialen Sichern des auf-/eingeschobenen zweiten rohrförmigen Teils (250; 350), wobei der Klemm-/Krallring derart ausgebildet ist, dass eine grossflächige radiale Presskraft auf das auf-/eingeschobene zweite rohrförmige Teil ausgeübt wird und dass Krallen des Klemm-/Krallrings kleinräumig in das zweite rohrförmige Teil eindringen;
wobei
f) der Klemm-/Krallring (224.1, 224.2; 324; 424; 524; 624) in einer sich in Ein-/ Aufschubrichtung erweiternden Aufnahmenut (222.1 b, 222.2b; 322b) im Kappenteil (222.1, 222.2; 322) aufgenommen ist;
g) der Klemm-/Krallring (324; 624) in der Aufnahmenut (322b) verschiebbar ist und durch ein stirnseitig angeordnetes Federelement (324a; 624a) gegen die Ein-/ Aufschubrichtung gedrückt wird;
**dadurch gekennzeichnet, dass**
h) der Klemm-/Krallring (524) mehrere Krallsegmente (524e) umfasst, wobei jedes Krallsegment (524e) mehrere in Umfangsrichtung voneinander beabstandete Krallen (524g) aufweist.

2. Anschlussstück nach Anspruch 1, **dadurch gekennzeichnet dass** die Ringdichtung (217.1a, 217.1b, 217.2a, 217.2b; 317; 617, 717) derart ausgebildet und am ersten rohrförmigen Teil (221.1, 221.2; 321) angebracht ist, dass beim Aufschieben bzw. Einschieben des zweiten rohrförmigen Teils (250; 350) die Ringdichtung (217.1a, 217.1b, 217.2a, 217.2b; 317) bezüglich des ersten rohrförmigen Teils (221.1, 221.2; 321) aus einer ersten Position in eine zweite Position verschoben wird, wobei die Verschiebung eine Kompression der Ringdichtung (217.1 a, 217.1b, 217.2a, 217.2b; 317; 617, 717) zwischen dem ersten rohrförmigen Teil (221.1, 221.2; 321) und dem zweiten rohrförmigen Teil (250; 350) zur Folge hat.

3. Anschlussstück nach Anspruch 1 oder 2, **dadurch gekennzeichnet, dass** die Ringnut (216.1a, 216.1b, 216.2a, 216.2b; 316; 416; 516) einen in Ein-/Aufschubriehtung zulaufenden, insbesondere konischen, Abschnitt aufweist und dass die Ringdichtung (217.1 a, 217.1 b, 217.2a, 217.2b; 317; 617, 717) auf diesem Abschnitt verschiebbar ist, wobei die Ringnut (216.1a, 216.1b, 216.2a, 216.2b; 316; 416; 516) und die Ringdichtung (217.1a, 217.1b, 217.2a, 217.2b; 317; 617, 717) derart ausgebildet sind, dass die Ringdichtung (217.1a, 217.1 b, 217.2a, 217.2b; 317; 617, 717) beim Auf-bzw. Einschieben des zweiten rohrförmigen Teils (250; 350) durch eine Verschiebung auf dem Abschnitt mechanisch vorgespannt wird.

4. Anschlussstück nach Anspruch 3, **dadurch gekennzeichnet, dass** die Ringnut (216.1a, 216.1b, 216.2a, 216.2b; 316; 416; 516) im Bereich des Abschnitts eine widerhakenartige Struktur (316b; 416b; 516b) aufweist, um eine Bewegung der Ringdichtung (217.1a, 217.1b, 217.2a, 217.2b; 317; 617, 717) zurück in ihre erste Position zu verhindern.

5. Anschlussstück nach Anspruch 3 oder 4, **dadurch gekennzeichnet, dass** ein Neigungswinkel des Abschnitts der Ringnut (216.1a, 216.1b, 216.2a, 216.2b; 316; 416; 516) zwischen 3 und 20°, bevorzugt zwischen 5 und 15°, liegt.

6. Anschlussstück nach einem der Ansprüche 1 bis 5, **dadurch gekennzeichnet, dass** das erste rohrförmige Teil (221.1, 221.2; 321) als Stütznippel ausgebildet ist, auf welchen das zweite rohrförmige Teil (250; 350) aufschiebbar ist.

7. Anschlussstück nach Anspruch 6, **dadurch gekennzeichnet, dass** das Kappenteil (222.1, 222.2; 322) lösbar am Stütznippel (221.1, 221.2; 321) befestigt ist.

8. Anschlussstück nach Anspruch 7, **dadurch gekennzeichnet, dass** das Kappenteil über eine Schraubverbindung am Stütznippel befestigt ist.

9. Anschlussstück nach Anspruch 7 oder 8, **dadurch gekennzeichnet, dass** der Stütznippel (221.1, 221.2; 321) aus Metall und das Kappenteil aus Kunststoff gefertigt (222.1, 222.2; 322) sind.

10. Anschlussstück nach einem der Ansprüche 1 bis 9, **dadurch gekennzeichnet, dass** das Kappenteil zumindest teilweise transparent ausgebildet ist.

11. Anschlussstück nach einem der Ansprüche 1 bis 10, **dadurch gekennzeichnet, dass** die Ringdichtung (217.1a, 217.1b, 217.2a, 217.2b; 317; 617, 717) aus einem Kautschukmaterial mit einer Härte von 30 - 95 Shore A, insbesondere von 50 - 75 Shore A, bevorzugt 55 - 65 Shore A gefertigt ist.

12. Anschlussstück nach einem der Ansprüche 1 bis 11, **dadurch gekennzeichnet, dass** das Kappenteil (222.1, 222.2; 322) im Wesentlichen einstückig ist und dass ein Aussendurchmesser des Klemm-/Krallrings (224.1, 224.2; 324; 424; 524; 624) für das Einbringen in das Kappenteil (222.1, 222.2; 322) verringert werden kann.

13. Anschlussstück nach Anspruch 12, **dadurch gekennzeichnet, dass** der Klemm-/Krallring (224.1, 224.2; 324; 424; 524; 624) mindestens zwei, bevorzugt mindestens drei, Klemmsegmente (224.1b, 224.2b; 324b; 424b; 524b; 624b) umfasst, welche durch verformbare, insbesondere einfaltbare, Verbindungsabschnitte (424f; 524f; 624f) miteinander verbunden sind.

14. Anschlussstück nach Anspruch 13, **dadurch gekennzeichnet, dass** der Klemm-/Krallring (424) ein Krallelement (424d) aus Metall umfasst, welches einstückig mit den Verbindungsabschnitten (424f) ausgeführt ist, wobei die Klemmsegmente (424b) am Krallelement (424d) befestigt sind.

15. Anschlussstück nach einem der Ansprüche 1 bis 14, **dadurch gekennzeichnet, dass** die Federelemente als schräg vorstehende Laschen (624a) ausgebildet und an der Stirnseite des Klemm-/Krallrings (624) angeformt sind.

16. Anschlussstück nach einem der Ansprüche 1 bis 15, **dadurch gekennzeichnet, dass** eine Innenfläche des Klemm-/Krallrings (424, 624) tangential verlaufende, hervortretende Rippen (424c, 624c) aufweist, welche sägezahnartig ausgebildet sind.

17. Verbindungsstück (210) umfassend ein Anschlussstück (211.1, 211.2) nach einem der Ansprüche 1 bis 16.

18. Armatur umfassend ein Anschlussstück nach einem der Ansprüche 1 bis 16.

## Claims

1. Connecting piece (211.1, 211.2; 311) with a first tubular part (221.1, 221.2; 321), which is connectable in a fluid-tight manner to a second tubular part (250; 350) of a fluid-carrying line system, wherein
a) the connecting piece (211.1, 211.2; 311) is formed in such a manner that, in the connected state, one of the tubular parts (221.1, 221.2; 321) is partially enclosed by the other tubular part (250; 350),
b) an annular groove (216.1a, 216.1b, 216.2a, 216.2b; 316; 416; 516) in which an annular seal (217.1a, 217.1b, 217.2a, 217.2b; 317; 617, 717) is provided is made in the first tubular part (221.1, 221.2; 321), on a surface contacting the second tubular part (250; 350) in the connected state,
c) the connecting piece (211.1, 211.2; 311) is formed in such a manner that the second tubular part (250; 350) is connectable to the first tubular part in the sense of a plug-in connection by pushing said second tubular part onto the first part (221.1, 221.2; 321) or by pushing said second tubular part into the first part in a pushing-in/pushing-on direction;
d) the connecting piece comprises a cap part (222.1, 222.2; 322) which partially surrounds the second tubular part (250; 350) in the connected state;
e) the connecting piece (211.1, 211.2; 311) comprises a clamping/clasping ring (224.1, 224.2; 324; 424; 524; 624), for axially securing the pushed-on/pushed-in second tubular part (250; 350), wherein the clamping/clasping ring is formed in such a manner that an extensive radial pressing force is exerted on the pushed-on/pushed-in second tubular part, and in that claws of the clamping/clasping ring penetrate the second tubular part over a small area;
wherein
f) the clamping/clasping ring (224.1, 224.2; 324; 424; 524; 624) is received in a receiving groove (222.1b, 222.2b; 322b) in the cap part (222.1, 222.2; 322), which receiving groove widens in the pushing-in/pushing-on direction;
g) the clamping/clasping ring (324; 624) is displaceable in the receiving groove (322b) and is pressed counter to the pushing-in/pushing-on direction by a spring element (324a; 624a) arranged on the end side;
**characterized in that**
h) the clamping/clasping ring (524) comprises a plurality of clasping segments (524e), wherein each clasping segment (524e) has a plurality of claws (524g) spaced apart from one another in the circumferential direction.

2. Connecting piece according to Claim 1, **characterized in that** the annular seal (217.1a, 217.1b, 217.2a, 217.2b; 317; 617, 717) is formed and mounted on the first tubular part (221.1, 221.2; 321) in such a manner that, when the second tubular part (250; 350) is pushed on or pushed in, the annular seal (217.1a, 217.1b, 217.2a, 217.2b; 317) is displaced with respect to the first tubular part (221.1, 221.2; 321) from a first position into a second position, wherein the displacement results in the annular seal (217.1a, 217.1b, 217.2a, 217.2b; 317; 617, 717) being compressed between the first tubular part (221.1, 221.2; 321) and the second tubular part (250; 350),

3. Connecting piece according to Claim 1 or 2, **characterized in that** the annular groove (216.1a, 216.1b, 216.2a, 216.2b; 316; 416; 516) has an, in particular conical, section tapering in the pushing-in/pushing-on direction, and **in that** the annular seal (217.1a, 217.1b, 217.2a, 217.2b; 317; 617, 717) is displaceable on said section, wherein the annular groove (216.1a, 216.1b, 216.2a, 216.2b; 316; 416, 516) and the annular seal (217.1a, 217.1b, 217.2a, 217.2b; 317; 617, 717) are formed in such a manner that, when the second tubular part (250; 350) is pushed on or pushed in, the annular seal (217.1a, 217.1b, 217.2a, 217.2b; 317; 617, 717) is mechanically prestressed by displacement on the section.

4. Connecting piece according to Claim 3, **characterized in that** the annular groove (216.1a, 216.1b, 216.2a, 216.2b; 316; 416; 516) has a barb-like structure (316b; 416b; 516b) in the region of the section in order to prevent a movement of the annular seal (217.1a, 217.1b, 217.2a, 217.2b; 317; 617, 717) back into its first position.

5. Connecting piece according to Claim 3 or 4, **characterized in that** the angle of inclination of the section of the annular groove (216.1a, 216.1b, 216.2a, 216.2b; 316; 416; 516) is between 3 and 20°, preferably between 5 and 15°.

6. Connecting piece according to one of Claims 1 to 5, **characterized in that** the first tubular part (221.1, 221.2; 321) is formed as a supporting nipple onto which the second tubular part (250; 350) can be pushed.

7. Connecting piece according to Claim 6, **characterized in that** the cap part (222.1, 222.2; 322) is fastened reversibly to the supporting nipple (221.1, 221.2; 321).

8. Connecting piece according to Claim 7, **characterized in that** the cap part is fastened to the supporting nipple via a screw connection.

9. Connecting piece according to Claim 7 or 8, **characterized in that** the supporting nipple (221.1, 221.2; 321) is manufactured from metal and the cap part (222.1, 222.2; 322) is manufactured from plastic.

10. Connecting piece according to one of Claims 1 to 9, **characterized in that** the cap part is formed so as to be at least partially transparent.

11. Connecting piece according to one of Claims 1 to 10, **characterized in that** the annular seal (217.1a, 217.1b, 217.2a, 217.2b; 317; 617, 717) is manufactured from a rubber material having a Shore A hardness of 30-95, in particular a Shore A hardness of 50-75, preferably a Shore A hardness of 55-65.

12. Connecting piece according to one of Claims 1 to 11, **characterized in that** the cap part (222.1, 222.2; 322) is substantially integral, and **in that** an outer diameter of the clamping/clasping ring (224.1, 224.2; 324; 424; 524; 624) can be reduced for placing said ring into the cap part (222.1, 222.2; 322).

13. Connecting piece according to Claim 12, **characterized in that** the clamping/clasping ring (224.1, 224.2; 324; 424; 524; 624) comprises at least two, preferably at least three, clamping segments (224.1b, 224.2b; 324b; 424b; 524b; 624b) which are connected to one another by deformable, in particular inwardly foldable, joining sections (424f; 524f; 624f).

14. Connecting piece according to Claim 13, **characterized in that** the clamping/clasping ring (424) comprises a metal clasping element (424d) which is formed integrally with the joining sections (424f), wherein the clamping segments (424b) are fastened to the clasping element (424d).

15. Connecting piece according to one of Claims 1 to 14, **characterized in that** the spring elements are formed as obliquely protruding tabs (624a) and are integrally formed on the end side of the clamping/clasping ring (624).

16. Connecting piece according to one of Claims 1 to 15, **characterized in that** an inner surface of the clamping/clasping ring (424, 624) has tangentially running, protruding ribs (424c, 624c) which are formed in the manner of serrations.

17. Joining piece (210) comprising a connecting piece (211.1, 211.2) according to one of Claims 1 to 16.

18. valve-type fitting comprising a connecting piece according to one of Claims 1 to 16.

## Revendications

1. Pièce de raccordement (211.1, 211.2; 311) comprenant une première partie tubulaire (221.1, 221.2 ; 321), qui peut être connectée de manière étanche aux fluides à une deuxième partie tubulaire (250 ; 350) d'un système de conduite conduisant les fluides,
a) la pièce de raccordement (211.1, 211.2 ; 311) étant réalisée de telle sorte que l'une des parties tubulaires (221.1, 221.2 ; 321), dans l'état connecté, soit partiellement entourée par l'autre partie tubulaire (250 ; 350),
b) dans la première partie tubulaire (221.1, 221.2 ; 321), au niveau d'une surface venant en contact, dans l'état connecté, avec la deuxième partie tubulaire (250 ; 350), étant pratiquée une rainure annulaire (216.1a, 216.1b, 216.2a, 216.2b ; 315 ; 416 ; 516), dans laquelle rainure annulaire est introduit un joint d'étanchéité annulaire (217.1a, 217.1b, 217.2a, 217.2b ; 317 ; 617, 717),
c) la pièce de raccordement (211.1, 211.2 ; 311) étant réalisée de telle sorte que la deuxième partie tubulaire (250 ; 350) puisse être connectée en étant poussée sur la première partie (221.1, 221.2 ; 321) ou bien en étant enfoncée dans la première partie dans une direction d'enfoncement/de poussée dans le sens d'une connexion par enfichage avec la première partie tubulaire ;
d) la pièce de raccordement comprenant une partie de coiffe (222.1, 222.2 ; 322), laquelle entoure partiellement, dans l'état connecté, la deuxième partie tubulaire (250 ; 350) ;
e) la pièce de raccordement (211.1, 211.2 ; 311) comprenant un collier de serrage/de retenue (224.1, 224.2 ; 324 ; 424 ; 524 ; 624) pour la fixation axiale de la deuxième partie tubulaire (250 ; 350) poussée/enfoncée, le collier de serrage/de retenue étant réalisé de telle sorte qu'une force de pression radiale de grande surface s'exerce sur la deuxième partie tubulaire poussée/enfoncée et que des griffes du collier de serrage/de retenue pénètrent sur un petit espace dans la deuxième partie tubulaire ;
f) le collier de serrage/de retenue (224.1, 224.2 ; 324 ; 424 ; 524 ; 624) étant reçu dans une rainure de réception (222.1b, 222.2b ; 322b) dans la partie de coiffe (222.1, 222.2 ; 322) s'élargissant dans la direction d'enfoncement/de poussée ;
g) le collier de serrage/de retenue (324 ; 624) pouvant être déplacé dans la rainure de réception (322b) et étant pressé à l'encontre de la direction d'enfoncement/de poussée par un élément de ressort disposé du côté frontal (324a ; 624a) ;
**caractérisée en ce que**
h) le collier de serrage/de retenue (524) comprend plusieurs segments de griffe (524e), chaque segment de griffe (524e) présentant plusieurs griffes (524g) espacées les unes des autres dans la direction périphérique.

2. Pièce de raccordement selon la revendication 1, **caractérisée en ce que** le joint d'étanchéité annulaire (217.1a, 217,1b, 217.2a, 217.2b ; 317 ; 617, 717) est réalisé de telle sorte, et est disposé sur la première partie tubulaire (221.1, 221.2 ; 321) de telle sorte que lors de la poussée ou de l'enfoncement de la deuxième partie tubulaire (250 ; 350), le joint d'étanchéité annulaire (217.1a, 217.1b, 217.2a, 217.2b ; 317) soit déplacé par rapport à la première partie tubulaire (221.1, 221.2; 321) d'une première position dans une deuxième position, le déplacement entraînant une compression du joint d'étanchéité annulaire (217.1a, 27.7.1b, 217.2a, 217.2b ; 317 ; 617, 717) entre la première partie tubulaire (221.1, 221.2 ; 321) et la deuxième partie tubulaire (250 ; 350).

3. Pièce de raccordement selon la revendication 1 ou 2, **caractérisée en ce que** la rainure annulaire (216.1a, 216.1b, 216.2a, 216.2b ; 316 ; 416 ; 516) présente une portion notamment conique se terminant dans la direction d'enfoncement/de poussée, et **en ce que** le joint d'étanchéité annulaire (217.1a, 217.1b, 217.2a, 217.2b ; 317 ; 617, 717) peut être déplacé sur cette portion, la rainure annulaire (216.1a, 216.1b, 216.2a, 216.2b ; 316 ; 416 ; 516) et le joint d'étanchéité annulaire (217.1a, 217.1b, 217.2a, 217.2b ; 317; 617, 717) étant réalisés de telle sorte que le joint d'étanchéité annulaire (217.1a, 217.1b, 217.2a, 217.2b ; 317 ; 617, 717), lors de la poussée ou de l'enfoncement de la deuxième partie tubulaire (250 ; 350), soit précontraint mécaniquement par un déplacement sur la portion.

4. Pièce de raccordement selon la revendication 3, **caractérisée en ce que** la rainure annulaire (216.1a, 216.1b, 216.2a, 216.2b ; 316 ; 416 ; 516) présente, dans la région de la portion, une structure de type barbe (316b ; 416b ; 516b), afin d'empêcher un déplacement du joint d'étanchéité annulaire (217.1a, 217.1b, 217.2a, 217.2b ; 317 ; 617, 717) le ramenant dans sa première position.

5. Pièce de raccordement selon la revendication 3 ou 4, **caractérisée en ce qu'**un angle d'inclinaison de la portion de la rainure annulaire (216.1a, 216.1b, 216.2a, 216.2b ; 316 ; 416 ; 516) est compris entre 3 et 20°, de préférence entre 5 et 15°.

6. Pièce de raccordement selon l'une quelconque des revendications 1 à 5, **caractérisée en ce que** la première partie tubulaire (221.1, 221.2 ; 321) est réalisée sous forme de raccord de support, sur lequel peut être poussée la deuxième partie tubulaire (250 ; 350).

7. Pièce de raccordement selon la revendication 6, **caractérisée en ce que** la partie de coiffe (222.1, 222.2 ; 322) est fixée de manière détachable sur le raccord de support (221.1, 221.2 ; 321).

8. Pièce de raccordement selon la revendication 7, **caractérisée en ce que** la partie de coiffe est fixée sur le raccord de support par le biais d'une connexion vissée.

9. Pièce de raccordement selon la revendication 7 ou 8, **caractérisée en ce que** le raccord de support (221.1, 221.2 ; 321) est en métal et la partie de coiffe (222.1, 222.2 ; 322) est en plastique.

10. Pièce de raccordement selon l'une quelconque des revendications 1 à 9, **caractérisée en ce que** la partie de coiffe est réalisée sous forme au moins partiellement transparente.

11. Pièce de raccordement selon l'une quelconque des revendications 1 à 10, **caractérisée en ce que** le joint d'étanchéité annulaire (217.1a, 217.1b, 217.2a, 217.2b ; 317 ; 617, 717) est fabriqué en un matériau à base de caoutchouc ayant une dureté de 30-95 Shore A, en particulier de 50-75 Shore A, de préférence de 55-65 Shore A.

12. Pièce de raccordement selon l'une quelconque des revendications 1 à 11, **caractérisée en ce que** la partie de coiffe (222.1, 222.2 ; 322) est réalisée essentiellement d'une seule pièce et **en ce qu'**un diamètre extérieur du collier de serrage/de retenue (224.1, 224.2; 324 ; 424; 524 ; 624) peut être réduit pour l'introduction dans la partie de coiffe (222.1, 222.2 ; 322).

13. Pièce de raccordement selon la revendication 12, **caractérisée en ce que** le collier de serrage/de retenue (224.1, 224.2 ; 324 ; 424 ; 524 ; 624) comprend au moins deux, de préférence au moins trois, segments de serrage (224.1b, 229.2b ; 324b ; 424b ; 524b ; 624b), qui sont connectés les uns aux autres par des portions de connexion déformables, en particulier pliables (424; 524f ; 624f).

14. Pièce de raccordement selon la revendication 13, **caractérisée en ce que** le collier de serrage/de retenue (424) comprend un élément de griffe (424d) en métal, qui est réalisé d'une seule pièce avec les portions de connexion (424f), les segments de serrage (424b) étant fixés sur l'élément de griffe (424d).

15. Pièce de raccordement selon l'une quelconque des revendications 1 à 14, **caractérisée en ce que** les éléments de ressort sont réalisés sous forme de pattes saillant obliquement (624a) et sont façonnés sur le côté frontal du collier de serrage/de retenue (624).

16. Pièce de raccordement selon l'une quelconque des revendications 1 à 15, **caractérisée en ce qu'**une surface interne du collier de serrage/de retenue (424, 624) présente des nervures saillantes s'étendant tangentiellement (424c, 624c), lesquelles sont réalisées en forme de dents de scie.

17. Pièce de connexion (210) comprenant une pièce de raccordement (211.1, 211.2) selon l'une quelconque des revendications 1 à 16.

18. Armature comprenant une pièce de raccordement selon l'une quelconque des revendications 1 à 16.
